# EUROPÄISCHE PATENTSCHRIFT

(11) **EP 0 959 118 B1**
(45) Veröffentlichungstag und Bekanntmachung des Hinweises auf die Patenterteilung: **27.07.2005**
(21) Anmeldenummer: 99109474.9
(22) Anmeldetag: 12.05.1999
(51) Int. Cl.: C09J 5/06, C09J 5/08, C09J 11/06, C09J 11/08, B60J 10/02, C09J 5/00

(54) **Klebeverbindung**
Adhesive Bonding
Collage

(30) Priorität: 16.05.1998 DE 19822044
(43) Veröffentlichungstag der Anmeldung: 24.11.1999
(73) Patentinhaber: DaimlerChrysler AG, 70567 Stuttgart (DE)
(72) Erfinder: Degen, Winfried Dr., 73728 Esslingen (DE)

(56) Entgegenhaltungen:
- DE-A- 19 629 311
- FR-A- 2 649 654
- US-A- 3 993 524

## Beschreibung

Die vorliegende Erfindung betrifft eine Klebeverbindung nach dem Oberbegriff des Patentanspruchs 1.

Flächige Bauteile tragen bei modernen Kraftfahrzeugen wesentlich zur Festigkeit des Kraftfahrzeugs und somit zur Insassensicherheit bei. Dies gilt auch für die Fahrzeugverglasung, welche üblicherweise fest in den Karosserierahmen eingeklebt wird. Bei Fahrzeugen mit großen Verglasungsflächen ist es hierbei wünschenswert, daß die jeweiligen Fensterscheiben bei einem Unfall soweit unbeschädigt erhalten bleiben, daß einerseits kein Fahrzeuginsasse durch die Scheibe geschleudert werden kann, und andererseits keine Verletzungsgefahr von Scheibensplittern- bzw. -bruchstücken ausgeht. Insbesondere bei Bussen ist es erstrebenswert, daß die Fensterscheiben einen Überschlag bzw. ein seitliches Aufrutschen des Busses unbeschädigt überstehen. Fensterscheiben, die diesen Anforderungen genügen, lassen sich beispielsweise aus schlagzähem Kunststoff oder Kunststoffkernscheiben realisieren.

Als nachteilig erweist sich bei derartigen widerstandsfähigen Scheiben, daß im Falle eines Unfalls der Ausstieg der Fahrzeuginsassen durch die Scheiben hindurch erschwert oder gar unmöglich ist, was insbesondere im Falle unbenutzbarer Türen die Sicherheit der Insassen in höchstem Maße gefährdet.

Aus der DE-OS 30 21 263 ist ein Verfahren zur Herstellung einer lösbaren Klebeverbindung bekannt, bei der in die Klebung ein elektrisch leitender Faserstoff eingebracht wird, der durch elektrischen Strom aufgeheizt wird. Hierdurch wird der Klebsoff erweicht und mechanisch lösbar. Die Verbindung von Fensterscheiben mit Karosserieteilen von Kraftfahrzeugen ist nicht Gegenstand dieser Druckschrift.

Die EP 0 521 825 beschreibt ein in einer Kleberaupe vorgesehenes, erwärmbares Trennelement, beispielsweise eine elektrisch leitfähige Kunststoffschicht. Es wird in dieser Druckschrift vorgeschlagen, eine derart ausgebildete Kleberaupe zur Befestigung von Fahrzeugscheiben an einer Karosserie zu verwenden.

Die in den genannten Druckschriften beschriebenen Lehren erweisen sich aber insofern als nachteilig, als die Erwärmung und die Aufweichung des Klebstoffs nur relativ langsam durchführbar ist. Der erwärmte Kunststoff erlaubt zwar eine Entfernung einer Fensterscheibe aus dem entsprechenden Karosserierahmen, er weist jedoch noch eine hohe Viskosität auf, so daß ein großer Krafteinsatz zur tatsächlichen Entfernung der Fensterscheibe notwendig ist. Ferner erlangen derartige Klebeverbindungen bei Abkühlung ihre ursprungliche Festigkeit zurück. Fällt beispielsweise als Folge eines Unfalls die Stromversorgung der Klebeverbindungen aus, beispielsweise aufgrund thermischer oder mechanischer Beschädigungen, lassen sich die Fensterscheiben nur noch mit sehr hohem Kraftaufwand, oder überhaupt nicht mehr ohne Zerstörung aus ihrem Rahmen lösen.

Aufgabe der vorliegenden Erfindung ist daher die Schaffung einer Klebeverbindung zur Verbindung einer Scheibe mit einem Scheibenrahmen, welche sich im Notfall schnell und zuverlässig lösen läßt.

Diese Aufgabe wird gelöst durch eine Klebeverbindung mit den Merkmalen des Patentanspruchs 1.

Die erfindungsgemäße Klebeverbindung gewährleistet, daß im Notfall eine Scheibe schnell und zuverlässig ohne Zerstörung aus ihrem Rahmen entfernt werden kann. Aufgrund der exothermen Reaktion des der Klebeverbindung zugegebenen Stoffes erfolgt die Verringerung der mechanischen Festigkeit der Klebeverbindung in irreversibler Weise. Die bei einer exothermen Reaktion auftretenden hohen Temperaturen führen zu einer raschen thermischen Zersetzung der Klebeverbindung, wodurch diese ihre Klebkraft verliert. Fällt beispielsweise nach einem Unfall während der exothermen Reaktion der Klebeverbindung die Stromzufuhr, welche die Klebeverbindung mit Wärme beaufschlagt, aus, kommt es nicht wieder zu einer Zunahme der mechanischen Festigkeit der Klebeverbindung.

Als exotherm reagierende Stoffe sind reine Stoffe oder Stoffgemische verwendbar. Es kann sich hierbei um Stoffgemische handeln, bei denen die Einzelkomponenten für sich nicht reaktionsfähig sind, welche aber im Gemisch eine stark exotherme Reaktion durchführen können. Die stark exotherm reagierenden Stoffe können in fester Form als Partikel, Fasern usw. einer Klebemasse zur Bereitstellung der erfindungsgemäßen Klebeverbindung zugegeben werden. Sie können auch in Form einer festen Lösung in der Klebeverbindung vorliegen. Auch flüssige exotherm reagierende Stoffe können erfindungsgemäß vorteilhaft verwendet werden. Sie können beispielsweise in der Klebstoffmasse als Emulsion vorliegen, oder der Klebstoffmasse in mikroverkapselter Form zugegeben werden.

Die erfindungsgemäße Klebevorrichtung weist einen schlagempfindlichen Explosivstoff zur Erzeugung der Auslösetemperatur auf. Hiermit ist in besonders schneller Weise die Auslösung der exothermen Reaktion möglich. Ferner ist durch diese Maßnahme eine weitgehende Unabhängigkeit von einer Stromversorgung zur Erzeugung der lösetemperatur der exothermen Reaktion gewährleistet.

Es ist bevorzugt, daß die exotherme Reaktion unter Gasblasenbildung innerhalb der Klebeverbindung erfolgt.

Nach einer bevorzugten Ausgestaltung der Erfindung ist der exotherm reagierende Stoff derart beschaffen, daß seine exotherme Reaktion eine Gasblasenbildung in der Klebeverbindung verursacht. Eine derartige Gasblasenbildung verursacht zusätzliche mechanische Kräfte und unterstützt in vorteihafter Weise den Zerstörungs- bzw. Zersetzungsvorgang der Klebeverbindung.

Zweckmäßigerweise ist der exotherm reagierende Stoff in einer derartigen Menge und/oder Verteilung vorgesehen, daß bei Erreichen der Auslösetemperatur an wenigstens einer Stelle der Klebeverbindung die dadurch ausgelöste exotherme Reaktion sich ohne weitere Energiezufuhr über die gesamte Klebeverbindung ausbreitet. Hierdurch ist gewährleistet, daß ein eventueller Stromausfall den Vorgang der mechanischen Schwächung der Klebeverbindung nicht unterbricht bzw. umkehrt.

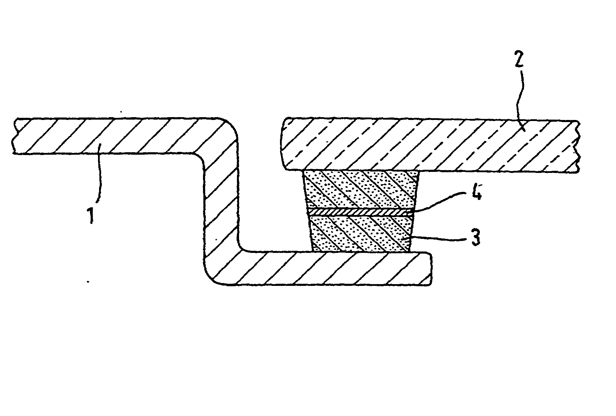

## Patentansprüche

1. Lösbare Klebeverbindung zur Verbindung einer Scheibe mit einem Rahmen, insbesondere Kleberaupe (3) zur Verbindung einer Fensterscheibe (2) eines Kraftfahrzeugs mit einer Kraftfahrzeugkarosserie (1), wobei die Klebeverbindung einen bei Erreichen oder Überschreiten einer Auslösetemperatur exotherm reagierenden Stoff enthält,
**gekennzeichnet durch**
einen schlagempfindlichen Explosivstoff zur Erzeugung der Auslösetemperatur.

2. Klebeverbindung nach Anspruch 1,
**dadurch gekennzeichnet,**
**daß** der exotherm reagierende Stoff derart beschaffen ist, daß seine exotherme Reaktion eine Gasblasenbildung in der Klebeverbindung verursacht.

3. Klebeverbindung nach einem der vorstehenden Ansprüche,
**dadurch gekennzeichnet,**
**daß** der exotherm reagierende Stoff in einer deratigen Menge und/oder Verteilung vorgesehen ist, daß bei Erreichen der Auslösetemperatur an wenigstens einer Stelle der Klebeverbindung die **dadurch** ausgelöste exotherme Reaktion sich ohne weitere Energiezufuhr über die gesamte Klebeverbindung ausbreitet.

4. Klebeverbindung nach einem der vorstehenden Ansprüche,
**dadurch gekennzeichnet,**
**daß** der exotherm reagierende Stoff als eine Lage in der Kleberaupe enthalten ist, welche Lage sich parallel zu den zu verklebenden Bauteilflächen erstreckt und vorzugsweise die gesamte Breite der Kleberaupe erfaßt.

5. Klebeverbindung nach einem der vorstehenden Ansprüche,
**dadurch gekennzeichnet,**
**daß** als exotherm reagierender Stoff ein Sprengstoff und/oder ein Treibmittel oder ein Gemisch verschiedener dieser Stoffe in feiner und gleichmäßiger Verteilung in dem Klebstoff enthalten ist.

6. Klebeverbindung nach einem der vorstehenden Ansprüche,
**dadurch gekennzeichnet,**
**daß** der exotherm reagierende Stoff als Feststoff in feiner Pulverform in dem Klebstoff enthalten ist.

7. Klebeverbindung nach Anspruch 6,
**dadurch gekennzeichnet,**
**daß** wenigstens eine der nachfolgend erwähnten Substanzen als exotherm reagierender, fester Stoff einzeln oder als Gemisch gleichmäßig in den Klebstoff eingebracht ist:
- Hexogen (Hexahydro-1,2,3-trinitro-1,3,5-triazin),
- Tetryl (N-Methyl-N-2,4,6-tetranitroanilin) oder
- Pikrinsäure (2,4,6-trinitrophenol).

8. Klebeverbindung nach einem der Ansprüche 1 bis 7,
**dadurch gekennzeichnet,**
**daß** der exotherm reagierende Stoff als flüssige bzw. gelförmige Substanz in mikroverkapselter Form gleichmäßig in den Klebstoff eingebracht ist.

9. Klebeverbindung nach Anspruch 8,
**dadurch gekennzeichnet,**
**daß** als exotherm reagierender, flüssiger bzw. gelförmiger Stoff eine Mischung von Nitrozellulose und Collodiumwolle oder Glycerintrinitrat in den Klebstoff eingebracht ist.

## Claims

1. Releasable adhesive connection for connecting a panel to a frame, in particular an adhesive bead (3) for connecting a window pane (2) of a motor vehicle to a motor vehicle body (1), the adhesive connection containing a material which reacts exothermally on reaching or exceeding a triggering temperature, **characterised by** an impact-sensitive explosive material for generating the triggering temperature.

2. Adhesive connection according to claim 1, **characterised in that** the exothermally reacting material is such that its exothermal reaction causes a gas bubble formation in the adhesive connection.

3. Adhesive connection according to any one of the preceding claims, **characterised in that** the exothermally reacting material is provided in a quantity and/or distribution such that on reaching the triggering temperature at at least one point of the adhesive connection, the exothermal reaction triggered thereby spreads over the entire adhesive connection without a further supply of energy.

4. Adhesive connection according to any one of the preceding claims, **characterised in that** the exothermally reacting material is contained as a layer in the adhesive bead, which layer extends parallel to the component faces to be glued and preferably includes the entire width of the adhesive bead.

5. Adhesive connection according to any one of the preceding claims, **characterised in that** an explosive and/or a propellant or a mixture of a variety of these materials is contained in a fine and uniform distribution in the adhesive as an exothermally reacting material.

6. Adhesive connection according to any one of the preceding claims, **characterised in that** the exothermally reacting material is contained as a solid in fine powder form in the adhesive.

7. Adhesive connection according to claim 6, **characterised in that** at least one of the substances mentioned below is introduced uniformly, as an exothermally reacting, solid material, individually or as a mixture, into the adhesive:
- Hexogen (Hexahydro-1, 2, 3-trinitro-1, 3, 5-triazine),
- Tetryl (N-Methyl-N-2, 4, 6-tetranitroaniline) or
- Picric acid (2, 4, 6-trinitrophenol).

8. Adhesive connection according to any one of claims 1 to 7, **characterised in that** the exothermally reacting material is uniformly introduced as a liquid or gel-like substance in microencapsulated form into the adhesive.

9. Adhesive connection according to claim 8, **characterised in that** a mixture of nitrocellulose and pyroxilin or glycerine trinitrate is introduced as an exothermally reacting, liquid or gel-like material into the adhesive.

## Revendications

1. Assemblage collé détachable pour relier une vitre à un cadre, en particulier cordon de collage (3) pour la liaison d'une vitre (2) d'un véhicule automobile avec une carrosserie de véhicule (1), l'assemblage collé contenant une substance réagissant de façon exothermique lorsqu'on atteint ou dépasse une température de déclenchement,
**caractérisé par**
une matière explosive sensible aux chocs pour générer la température de déclenchement.

2. Assemblage collé selon la revendication 1,
**caractérisé en ce que**
la substance réagissant de façon exothermique est de nature à ce que sa réaction exothermique provoque une formation de bulles de gaz dans l'assemblage collé.

3. Assemblage collé selon l'une quelconque des revendications précédentes,
**caractérisé en ce que**
la substance réagissant de façon exothermique est prévue dans une telle quantité et/ou dispersion que, lorsqu'on atteint la température de déclenchement en au moins un endroit de l'assemblage collé, la réaction exothermique ainsi déclenchée se propage sans nouvel apport d'énergie sur l'ensemble de l'assemblage collé.

4. Assemblage collé selon l'une quelconque des revendications précédentes,
**caractérisé en ce que**
la substance réagissant de façon exothermique est contenue sous la forme d'une couche dans le cordon de collage, laquelle couche s'étend parallèlement aux surfaces du composant à coller et comprend de préférence l'ensemble de la largeur du cordon de collage.

5. Assemblage collé selon l'une quelconque des revendications précédentes,
**caractérisé en ce que**,
comme substance réagissant de façon exothermique, un explosif et/ou un agent propulseur ou un mélange de différentes substances parmi celles-ci est inclus dans la colle avec une répartition fine et uniforme.

6. Assemblage collé selon l'une quelconque des revendications précédentes,
**caractérisé en ce que**
la substance réagissant de façon exothermique est incluse comme matière solide dans une forme de poudre fine dans la colle.

7. Assemblage collé selon la revendication 6,
**caractérisé en ce que**
au moins l'une des substances mentionnées ci-dessous est introduite comme substance solide et réagissant de façon exothermique individuellement ou sous forme de mélange de façon uniforme dans la colle :
- hexogène (hexahydro-1,2,3-trinitro-1,3,5-triazine),
- tétryl (N-méthyle-N-2,4,6-tétranitroaniline) ou
- acide picrique (2,4,6-trinitrophénol).

8. Assemblage collé selon l'une quelconque des revendications 1 à 7,
**caractérisé en ce que**
la substance réagissant de façon exothermique est introduite régulièrement sous la forme de substance liquide ou de gel dans une forme microencapsulée dans la colle.

9. Assemblage collé selon la revendication 8,
**caractérisé en ce que**,
en tant que substance réagissant de façon exothermique, liquide ou sous forme de gel, un mélange de nitrocellulose et de coton de collodion ou de trinitrate de glycérine est introduit dans la colle.
